(19) Europäisches Patentamt
European Patent Office
Office européen des brevets

(11) **EP 1 899 700 B1**

(12) **EUROPÄISCHE PATENTSCHRIFT**

(45) Veröffentlichungstag und Bekanntmachung des Hinweises auf die Patenterteilung:
**16.06.2010 Patentblatt 2010/24**

(21) Anmeldenummer: **06762218.3**

(22) Anmeldetag: **27.06.2006**

(51) Int Cl.:
**G01L 1/24** (2006.01)

(86) Internationale Anmeldenummer:
**PCT/EP2006/006213**

(87) Internationale Veröffentlichungsnummer:
**WO 2007/000323 (04.01.2007 Gazette 2007/01)**

(54) **OPTISCHER DEHNUNGSMESSTREIFEN**

OPTICAL STRAIN GAUGE STRIPS

JAUGE EXTENSOMETRIQUE OPTIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **29.06.2005 DE 102005030753**

(43) Veröffentlichungstag der Anmeldung:
**19.03.2008 Patentblatt 2008/12**

(73) Patentinhaber: **Hottinger Baldwin Messtechnik GmbH**
**64293 Darmstadt (DE)**

(72) Erfinder:
• **HAASE, Karl-Heinz**
**64319 Pfungstadt (DE)**
• **SCHMIDT, Michael**
**35435 Wettenberg (DE)**
• **BLIN, Regis**
**75017 Paris (FR)**

(74) Vertreter: **Behrens, Helmut et al**
**Gross-Gerauer Weg 55**
**64295 Darmstadt (DE)**

(56) Entgegenhaltungen:
EP-A- 0 892 250      EP-B- 1 129 327
FR-A- 2 864 202      US-A- 5 726 744

**Beschreibung**

Die Erfindung betrifft einen optischen Dehnungsmessstreifen zur Erfassung einer mehrachsigen Dehnung gemäß dem Oberbegriff des Patentanspruchs 1, sowie deren Herstellungsverfahren gemäß dem Oberbegriff des Patentanspruchs 11.

Zur messtechnischen Auswertung von Kräften oder zur Überwachung von mechanisch belasteten Bauteilen werden vielfach elektrische Dehnungsmessstreifen eingesetzt, die die Dehnung von kraftbeaufschlagten Bauelementen erfassen. Derartige elektrische Dehnungsmessstreifen bestehen meist aus fotolithografisch hergestellten mäanderförmigen Messgittern aus einem elektrischen Widerstandsmaterial, das auf einer Trägerfolie aus Kunststoff aufgetragen ist und zum mechanischen Schutz meist mit einer weiteren Kunststoffschutzfolie abgedeckt wird. Diese elektrischen Dehnungsmessstreifen werden zur Erfassung einer belastungsabhängigen Dehnung auf einen Verformungskörper appliziert und wandeln die Dehnung durch eine Widerstandsänderung des Messgitters in ein elektrisches Signal um, das der Dehnung oder der Krafteinwirkung proportional ist.

Zur zweiachsigen Messung von Dehnungen werden normalerweise Dehnungsmessstreifen eingesetzt, die als sogenannte Rosetten ausgebildet sind. Dabei werden meist zwei oder drei einzelne Messgitter auf einer gemeinsamen Trägerfolie angeordnet, die in der Regel in 45°, 60° oder 90°-Winkeln gegeneinander versetzt sind. Derartige dehnungsmessende Rosetten werden meist dazu verwendet, die Größe der Dehnung bzw. Kraft längs und senkrecht zu einer Hauptachse zu messen oder die Ausrichtung der Hauptachse zu ermitteln. Dabei sind T-Rosetten mit zwei Messgittern bekannt, die 90° gegeneinander versetzt angeordnet sind. Diese werden vornehmlich dazu eingesetzt, wenn ein zweiachsiger Spannungszustand vorliegt, dessen Hauptrichtung bekannt ist. Rosetten mit drei Messgittern werden meist dazu verwendet, um einen zweiachsigen Spannungszustand zu bestimmen, dessen Hauptspannungsrichtungen unbekannt sind. Dabei müssen die Messgitter möglichst nahe beieinander angeordnet sein, um auch die gleichen Dehnungen an der gleichen Stelle erfassen zu können, wodurch erst eine genaue Messung gewährleistet wird. Deshalb sind derartige bekannte rechteckige Rosetten mit drei Messgittern selten größer als 10 x 20 mm. Allerdings sind derartige elektrische Dehnungsmessstreifen sehr empfindlich gegenüber elektromagnetischen Feldern oder hochspannungsmäßiger Beeinflussung und dürfen auch nicht in explosionsgefährdeten Bereichen eingesetzt werden.

Ein derartiger Sensor zur hochspannungs- und elektromagnetisch unempfindlichen Erfassung von zweiachsigen mechanischen Spannungen ist aus der EP 1 129 327 B1 bekannt, der die zu messenden Dehnungen optisch ermittelt. Dazu sind optische Wellenleiter vorgesehen, die aus Lichtleitfasern bestehen. In diesen Lichtleitfasern werden sogenannte Bragg-Gitter eingeschrieben, die eine Reflektionswellenlänge erzeugen, die der erfassten Dehnung proportional ist. Diese Lichtleitfasern mit eingeprägten Bragg-Gittern werden in eine Trägerschicht aus Epoxydharz eingebettet oder auf Platten aufgeklebt. Diese Trägerschicht kann dann auf die Oberfläche von Verformungskörpern befestigt werden und überträgt somit die auf diese Trägerschicht einwirkende Dehnung auf die dehnungsmessenden Bragg-Gitter. Durch eine Dehnung ändert sich die reflektierte Bragg-Wellenlänge entsprechend der Dehnung und kann detektiert werden. Dieser optische Dehnungssensor ist als Rosette zur Messung einer zweiachsigen Spannung ausgebildet und besteht aus einem Lichtwellenleiter mit mindestens zwei oder drei hintereinander angeordneten Bragg-Gittern, die in Winkeln von 45°, 60° oder 90° zu einander ausgerichtet sind und damit die Dehnungen von Verformungskörpern wie elektrische Dehnungsmessstreifenrosetten erfassen können. Dabei sind die Verbindungsabschnitte des Wellenleiters zwischen den Bragg-Gittern bogenförmig geführt und dürfen wegen der Reflexionsverluste bestimmte Krümmungsradien nicht unterschreiten. Zur Minimierung der Krümmungsradien wird zusätzlich vorgeschlagen, die gebogenen Verbindungsabschnitte stark zu verjüngen, da sich hierdurch die Reflexionsverluste verringern lassen. Allerdings sind die Verbindungsabschnitte der Wellenleiter zwischen den Bragg-Gittern offensichtlich noch erheblich länger als die dehnungsmessenden Bragg-Gitter selbst, die bereits eine Länge von ca. 10 mm beanspruchen. Bei derartigen Rosetten aus Lichtleitfasern mit zwei oder drei Bragg-Gittern auf einer gemeinsamen Trägerschicht wird deshalb bei vergleichbarer Genauigkeit noch eine erheblich größere Applikationsfläche beansprucht als dies bei elektrischen Dehnungsmessstreifenrosetten erforderlich ist.

Der Erfindung liegt deshalb die Aufgabe zugrunde, vorgefertigte Dehnungsmessstreifen zur zweiachsigen Dehnungsmessung aus optischen Lichtwellenleitern zu schaffen, die bei hoher Messgenauigkeit eine kompakte Bauform aufweisen.

Diese Aufgabe wird durch die in Patentanspruch 1 und 11 angegebene Erfindung gelöst. Weiterbildungen und vorteilhafte Ausführungsbeispiele sind in den Unteransprüchen angegeben.

Die Erfindung hat den Vorteil, dass durch die Fixierung der optischen Wellenleiter mit den Bragg-Gittern in vorgesehenen Führungskanälen auf einer Trägerfolie sehr flache optische Dehnungsmessstreifen herstellbar sind. Insbesondere durch die Strahlaufweitungselemente kann ohne lange Umleitungsbögen in den Verbindungsabschnitten Bauraum auf der Trägerschicht eingespart werden, wodurch insbesondere Dehnungsmessstreifenrosetten ermöglicht werden, die eine Kompaktheit von elektrischen Dehnungsmessstreifenrosetten aufweisen.

Durch den Einsatz des Strahlaufweitungselementes können gleichzeitig alle Wellenleiterabschnitte geradlinig ausgebildet werden, so dass sich die Rosettengröße hauptsächlich nur noch aus der Länge der Bragg-Gitter ergibt, da die Strahlaufweitungselemente mit dem Zuführungsabschnitt nur eine geringe Baulänge aufweisen. Dadurch ergeben sich vorteilhafterweise sehr kleinflächige optische Dehnungsmessstreifen. Da die Strahlaufweitungselemente auch nur eine sehr geringe Querschnittsfläche aufweisen, die nicht wesentlich größer sind als die Wellenleiter selbst, sind diese auch vorteilhaft in eine dünne Trägerfolie integrierbar.

Durch den Einsatz des Strahlaufweitungselementes ist auch nur ein gemeinsamer Zuführungswellenleiter zur Lichtein- und - ausspeisung notwendig, so dass insbesondere bei längeren Entfernungen zwischen den Messstellen und den Auswerteeinheiten und bei Vielstellenmessungen vorteilhafterweise erhebliche Strecken von Verbindungsleitungen eingespart werden können.

Die Erfindung hat weiterhin den Vorteil, dass die vorgesehenen Führungskanäle vorzugsweise durch ein fotolithografisches Ätzverfahren oder ein mechanisches Bearbeitungsverfahren sehr genau herstellbar sind, so dass derartige optische Dehnungsmessstreifen eine hohe Reproduziergenauigkeit aufweisen und auch als Serienteile in großen Stückzahlen kostengünstig vorgefertigt werden können, um auf einfache Weise auf vorgesehenen Verformungskörpern oder anderen Dehnungskörpern applizierbar zu sein. Derartige vorgefertigte flache und kleinflächige optische Dehnungsmessstreifen können auch vorteilhaft in oder auf Faserverbundwerkstoffen befestigt werden, wobei diese die Faserstruktur nur wenig beeinträchtigen und vorteilhafterweise auch Dehnungsänderungen bis 10 % unbeschädigt standhalten, wie sie bei Verformungskörpern aus Faserverbundwerkstoffen üblich sind.

Die erfindungsgemäßen optischen Dehnungsmessstreifen haben gegenüber elektrischen Dehnungsmessstreifen den Vorteil, dass sie weitgehend unempfindlich gegenüber elektromagnetischen Feldern und Hochspannungsbereichen sind. Dabei besitzen sie vorteilhafterweise auch keine Stromversorgung, so dass sie unempfindlich gegenüber Leistungsschwankungen auf der Übertragungsstrecke sind und auch in explosionsgefährdeten Bereichen eingesetzt werden dürfen. Des weiteren ermöglicht die kraftschlüssige Verbindung der Bragg-Gitter in den Führungskanälen eine umschlossene Verbindungsstruktur mit der flächigen Trägerfolie, so dass eine gute und definierte Kraftübertragung auf die Bragg-Gitter gewährleistet wird, wodurch eine hohe Messgenauigkeit und insbesondere eine geringe Hysteresewirkung erreichbar ist.

Eine besondere Ausgestaltung der Erfindung, bei der die Lichtwellenleiter vollflächig in die Führungskanäle eingegossen werden, hat den Vorteil, dass damit sehr einfach herstellbare optische Dehnungsmessstreifen gefertigt werden können. Da diese optischen Dehnungsmessstreifen auch aus keramischen oder Glasträgerfolien und Lichtwellenleitern aus Glasmaterialien herstellbar sind, können diese vorteilhaft auch bei sehr hohen Temperaturbelastungen eingesetzt werden.

Bei einer besonderen Ausbildungsart der Erfindung mit zusätzlichen Bragg-Gittern zur Temperaturkompensation ist vorteilhaft, dass damit eine temperaturunabhängige Dehnungsmessung möglich wird. Damit ist auch gleichzeitig eine separate Temperaturerfassung ausführbar, wodurch vorteilhaft auch die thermische Überlastung des optischen Dehnungsmessstreifens und der angrenzenden übrigen Bauelemente erkannt werden kann.

Die Erfindung wird anhand eines Ausführungsbeispiels, das in der Zeichnung dargestellt ist, näher erläutert. Es zeigen:

Fig. 1: die Draufsicht auf einen optischen rosettenartigen Dehnungsmessstreifen, und

Fig. 2: einen Ausschnitt eines Schnittbildes in Vorderansicht durch den Zuführungsbereich des optischen Dehnungsmessstreifens.

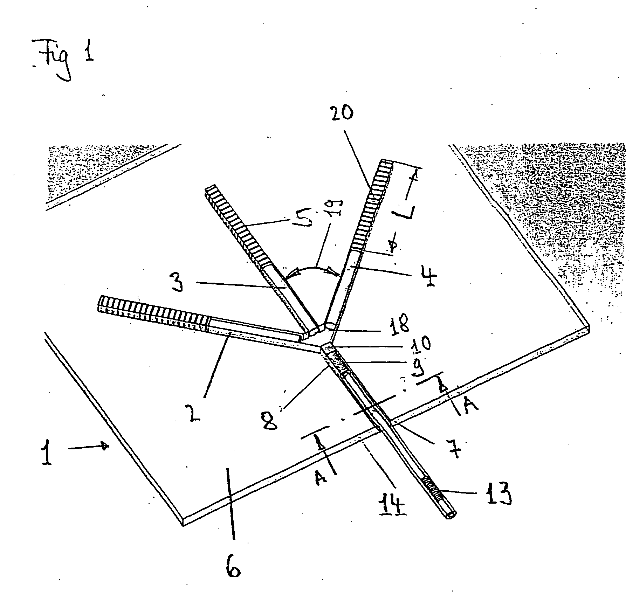

In Fig. 1 der Zeichnung ist ein optischer Dehnungsmessstreifen 1 dargestellt, der zur zweiachsigen Dehnungsmessung als Rosette ausgebildet ist und aus drei nebeneinander angeordneten messenden Wellenleiterabschnitten 2, 3, 4 mit eingeprägten Bragg-Gitter 5 besteht, die von einem Zuführungswellenleiter 7 gespeist werden, dessen Lichtwellensignale durch ein Strahlungsaufweitungselement 8 übertragen werden.

Die Lichtwellenleiter 2, 3, 4 sind alle als geradlinie Abschnitte ausgebildet und sind in einer gemeinsamen Trägerschicht 6 eingelassen, die als Trägerfolie ausgebildet ist. Dabei bestehen die Lichtwellenleiterabschnitte aus einem Zuführungswellenleiter und drei weiterführende Abschnitte von messenden Wellenleitern 2, 3, 4 mit vorzugsweise eingeprägten Bragg-Gittern 5. Zur Aufnahme der Lichtwellenleiter 2, 3, 4 ist eine dünne Trägerfolie 6 vorgesehen, die vorzugsweise aus einem harten und elastischen Kunststoff, wie z. B. Polyimid besteht. Die Trägerfolie 6 kann aber auch aus anderen harten elastischen Kunststoffen, Glas, Keramiken oder Metallen hergestellt sein. Dabei dient die Trägerfolie 6 vorzugsweise dazu, die vorgefertigten optischen Dehnungsmessstreifen 1 auf vorgesehenen Verformungskörpern zu applizieren oder in belasteten Bauelementen positionsgerecht und kraftschlüssig zu integrieren. Die Trägerfolie 6 ist dabei planar ausgebildet, besitzt vorzugsweise eine rechteckige oder quadratische Grundfläche und eine Dicke von etwa 0,55 mm. Die Grundfläche richtet sich im wesentlichen nach der Länge der messenden Lichtwellenleiterabschnitte 2, 3, 4 mit den Bragg-Gittern 5 und der winkelmäßigen Anordnung und der Anzahl der messenden Abschnitte.

Bei dem dargestellten Ausführungsbeispiel eines optischen Dehnungsmessstreifens 1 zur zweiachsigen Dehnungserfassung mittels drei winkelversetzt angeordneter Bragg-Gitter 5 ist eine Größe der Trägerfolie 6 von ca. 18 x 20 mm vorgesehen. Dies ergibt sich im wesentlichen aus der notwendigen Länge der Bragg-Gitter von ca. 10 mm bei einem hinreichenden Stör-Nutzsignalabstand. Durch Verringerung des Stör-Nutzsignalabstandes oder eine Verbesserung der Auswerteeinheit und Verkürzung der Zuführungsabschnitte der Lichtwellenleiter 2, 3, 4 sind auch bedeutend kleinere Grundflächen der Trägerfolien 6 von ca. 9 x 10 mm möglich, die auch von ihrer Messgenauigkeit noch mit elektrischen Dehnungsmessstreifenrosetten vergleichbar sind.

In die Trägerfolien 6 werden zur Fixierung der Lichtwellenleiter 2, 3, 4, 7 Führungskanäle 11 oder Vertiefungen eingearbeitet, deren Querschnitt mindestens dem Querschnitt der Lichtwellenleiter 2, 3, 4, 7 entspricht. Dazu werden vorzugsweise optische Wellenleiter 2, 3, 4, 7 aus Glasfasern mit einem Durchmesser von 0,25 mm eingesetzt, so dass die Führungskanäle 11 oder Vertiefungen im Zuführungsbereich mindestens eine Tiefe und Breite von 0,25 mm aufweisen.

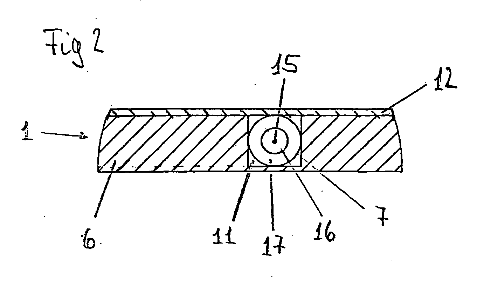

Die Anordnung des Lichtwellenleiters 7 im Zuführungsbereich ist in Fig. 2 der Zeichnung näher dargestellt. Aus dem Ausschnitt des Schnittbildes A-A ist ersichtlich, dass im Zuführungsbereich der Zuführungswellenleiter 7 vollständig in die Trägerfolie 6 integriert ist, da er den dort vorgesehenen Führungskanal 11 vollständig ausfüllt. Die Führungskanäle 11 werden in die Trägerfolie 6 vorzugsweise durch ein fotolithografisches Ätzverfahren eingearbeitet. Es sind aber auch mechanische oder thermische Verfahren bekannt, mit denen die feinen Führungskanäle 11 durch einen Materialabtrag in die Trägerfolie 6 eingearbeitet werden können.

Bei den Lichtwellenleitern 2, 3, 4, 7 handelt es sich um herkömmliche optische Lichtleitfasern aus Glasfasern, wie sie auch zur Telekommunikation als Einmodenfaser mit einer Wellenlänge von vorzugsweise λ = 1550 nm eingesetzt werden. Diese Lichtleitfasern 2, 3, 4, 7 bestehen vorzugsweise aus einem Faserkern 15, einem Fasermantel 16 und einer Faserschutzschicht 17, die auch entfallen kann. Die Lichtzuführung erfolgt durch einen einzigen Zuführungswellenleiter 7, der von einer Längskante 14 der Trägerfolie 6 geradlinig in diese eingelegt ist. Dazu wird dieser Zuführungswellenleiter 7 etwa in der Mitte der Trägerfolie 6 etwa 4 mm in den vorgefertigten Führungskanal 11 eingelegt und in diesen fixiert. Am Ende dieses Zuführungswellenleiters 7 ist als Strahlungsaufweitungselement 8 eine Gradienten-Index-Linse 9 (GRIN-Linse) und ein sinusförmiges Transmissions-Phasengitter 10 vorgesehen. Dabei weitet die GRIN-Linse 9 den Lichtstrahl auf eine Durchmesserfläche von 150 bis 500 μm auf.

In dem direkt daran angeordneten Transmissions-Phasengitter 10 erfolgt dann eine Beugung der Lichtwellen, so dass diese in die 0. und +/- 1. Beugungsordnung des Phasengitters gebeugt werden. Diese Beugungsordnungen liegen jeweils in -45°, 0° und +45°-Winkeln 19 zueinander. In den Beugungsordnungen sind die weiterführenden geradlinigen Führungskanäle 18 in Winkelabständen 19 von 45° für die zu messenden Lichtwellenleiterabschnitte 2, 3, 4 in die Trägerfolie 6 eingebracht.

Diese Führungskanäle 18 weisen etwa eine Länge von 10mm auf und eine Querschnittsfläche von vorzugsweise 0,125 x 0,125 mm. Diese Wellenleiterabschnitte 2, 3, 4 bestehen aus einer Lichtleitfaser mit einem Kern 15 und einem Mantel 16, einem Fotoresist aus Kunststoff oder einem Glasmaterial. In diese messenden Wellenleiterabschnitte 2, 3, 4 sind an dessen Ende sogenannte Bragg-Gitter 5 vorzugsweise eingeprägt, die alle eine unterschiedliche Gitterperiode Λ aufweisen.

Das Strahlungsaufweitungselement 8 kann aber auch nur aus der GRIN-Linse 9 bestehen. Dann würden sich die weiterführenden messenden Wellenleiterabschnitte 2, 3, 4 direkt an die GRIN-Linse 9 anschließen und in mehreren Winkelschritten auf eine Abzweigung von -45° und +45° gebracht. Dabei sind auch die messenden Lichtwellenleiterabschnitte 2, 3, 4 kraft- und formschlüssig mit der Trägerfolie 6 in den Führungskanälen 18 verbunden. Dies kann durch Einpressen oder Verkleben vorzugsweise mit einem aushärtbaren Epoxydharzklebers erfolgen. Zum Schutz gegen Feuchtigkeitseinwirkungen und mechanische Beeinträchtigungen ist zumindest der Teil mit den Führungskanälen 10, 18 mit einer zusätzlichen dünnen Schutzfolie 12 als Schutzschicht abgedeckt, die vorzugsweise aus dem gleichen Material wie die Trägerfolie 6 besteht und eine Dicke von vorzugsweise 0,05 mm aufweist.

In einer weiteren Ausführungsart der Erfindung werden die messenden Lichtwellenleiterabschnitte 2, 3, 4 als planare Lichtwellenleiter ausgeführt, die vorzugsweise in die Führungskanäle 18 eingegossen sind. Dazu werden beispielsweise in die Führungskanäle 18 eine Kunststoffträgerfolie 6 ein optisch leitfähiges Polymersubstrat oder ein anderes sogenanntes Fotoresist eingebracht, das eine höhere Brechungszahl als die Trägerfolie 6 aufweist. Dadurch entsteht ein Brechzahlensprung, durch den das Polymersubstrat als lichtleitfähiger Kunststoff wie ein Lichtwellenleiter wirkt. Dabei stellt das Polymersubstrat im Grunde den Kern und die Trägerfolie 6 den Mantel mit der niedrigeren Brechungszahl dar. Insbesondere bei rechteckigen oder quadratischen Führungskanälen 18 entsteht durch die Einbringung des lichtleitfähigen Substrats auf einfache Weise ein optischer Streifenleiter, der zur Lichtleitung bestimmter Wellenlängen wie eine Glasfaser geeignet ist. Bei dieser Ausführungsart werden vor Einbringen der lichtleitfähigen Schicht in die Führungskanäle 18 streifenförmige Unregelmäßigkeiten 20 im Abstand Λ eingeprägt, die dann als Bragg-Gitter 5 wirken. Diese können kammartige Erhebungen oder auch Vertiefungen darstellen, die auf eine Länge L von 3 bis 10 mm ein Bragg-Gitter 5 bilden, das die eingespeisten Lichtwellen mit einer vorgegebenen Wellenlänge $\lambda_B$ reflektiert. Da die Lichtwellenleiter 2, 3, 4 in den Führungskanälen 18 der Trägerschicht 6 fest eingelassen oder eingegossen und mit diesen fest verbunden sind, können damit auch alle auf die Trägerschicht 6 wirkenden Dehnungen genau erfasst werden.

Derartige Ausführungen von in den Führungskanälen 18 eingelassenen optisch leitfähigen Medien als Lichtwellenleiter 2, 3, 4 sind auch mit hitzebeständigen Glas- oder Keramikfolien als Trägerschicht 6 ausführbar, in dessen Kanäle 18 photonische Kristalle mit Quarzglassubstraten eingegossen werden. Dazu werden mit Hilfe der photonischen Kristalle die Bragg-Gitter ausgebildet, mit denen die Dehnung erfassbar ist. Die Kanäle können vorzugsweise auch durch einen feldunterstützten Ionenaustausch realisiert werden. Die Bragg-Gitter werden dann durch einen chemischen Ätzprozess von außen in diese Kanäle eingebracht. Derartige Ausführungen von optischen Dehnungsmessstreifen können bei Temperaturen bis 900 °C eingesetzt werden.

Am Zuführungswellenleiter 7 ist außerhalb der Trägerfolie 6 noch ein weiteres viertes Bragg-Gitter 13 mit einer separaten Gitterperiode $\Lambda_T$ eingeprägt, das der Temperaturkompensation dient. Zur Lichtwelleneinspeisung und zur Detektion der an den Bragg-Gittern 5 reflektierten Lichtsignale ist der Zuführungswellenleiter 7 mit einer nicht dargestellten Auswerteeinheit verbunden, die ein Spektrometer oder insbesondere ein abstimmbares hochauflösendes Fabry-Perot-Filter enthält.

Ein derartiger optischer Dehnungsmessstreifen 1 kann sowohl auf metallischen Verformungskörpern wie herkömmliche elektrische Dehnungsmessstreifen appliziert oder auch in Faserverbundstoffen eingelegt oder aufgeklebt werden. Mit derartigen optischen Dehnungsmessstreifen 1 sind nicht nur dehnungsbedingte Kraftmessungen, sondern auch Temperaturmessungen möglich, da gleichzeitig auch die Wärmeausdehnung detektierbar ist.

Ist ein derartiger optischer Dehnungsmessstreifen 1 auf einem kraftbeaufschlagten Verformungskörper appliziert, so kann damit wie folgt beschrieben eine beaufschlagte Kraft oder Dehnung erfasst werden. Denn durch die auf den Dehnungskörper einwirkende Kraft erfolgt an dessen Oberfläche eine Dehnungswirkung, die über die darauf applizierte Trägerfolie 6 auf die darin kraftschlüssig fixierten optischen Wellenleiter 2, 3, 4 übertragen wird. Dadurch entsteht auch eine Längenänderung innerhalb des Bragg-Gitter-Bereichs 5, da dies aus einem Stück des Kerns 15 der Lichtleitfaser 2, 3, 4 gebildet wird, der vom Mangel 16 umgeben ist, der einen niedrigeren Brechungsindex als der Kern 15 aufweist. Die Lichtleitfasern 2, 3, 4 sind als eine Einmodenfasern (Single-Mode-Faser) ausgebildet, bei der der Durchmesser des Faserkerns 15 mit 9 $\mu$m ausreichend klein ist, so dass sich das von einer vorzugsweise Infrarotlichtquelle stammende Licht nur in einer einzigen Mode entlang des Kerns 15 ausbreiten kann. Diese Single-Mode wird im wesentlichen von der Kern-Mantel-Grenze geleitet. Die Linien 20 des Bragg-Gitters 5 sind eine Reihe von vorzugsweise regelmäßig beabstandeten Störungen des effektiven Brechungsindexes n des Kerns 15. Das Bragg-Gitter 5 verläuft entlang einer Länge L der Lichtwellenleiter 2, 3, 4 und weist vorzugsweise eine Länge L von 10 mm auf, wobei L aber auch 1 bis 20 mm betragen kann.

Zur Herstellung von Bragg-Gittern 5 können verschiedene Verfahren eingesetzt werden. Bei einem dieser Verfahren werden die Störungen des Brechungsindexes n im Kern 15 erzeugt, indem die Lichtleitfaser 2, 3, 4 mit einer Phasenmaske maskiert und mit starkem Ultraviolettlicht bestrahlt wird. Bei einem anderen Verfahren werden die Indexstörungen n dadurch gebildet, dass die Lichtleitfaser 2, 3, 4 einem Interferenzmuster ausgesetzt wird, das aus zwei sich schneidenden Hälften eines UV-Laserstrahls erzeugt wird. Der Abstand $\Lambda$ zwischen den Indexstörungen n wird durch den Winkel bestimmt, bei dem sich die beiden Hälften des Strahls schneiden. Die durch diese Methoden bewirkten Störungen des Kernbrechungsindex n liegen normalerweise in der Größenordnung von einem Tausendstel oder darunter.

Die für die Fertigung von Bragg-Gittern 5 verwendeten Lichtleitfasern 2, 3, 4 haben in der Regel eine Schutzschicht 17 außerhalb des Mantels 16, die vorzugsweise aus einem Polymer besteht und für die eigentliche Lichtleitfunktion keine Bedeutung besitzt. Diese Schutzschicht 17 wird entfernt, bevor die Lichtleitfaser 2, 3, 4 zur Bildung des Bragg-Gitters 5 dem UV-Licht ausgesetzt wird. Nach der Bestrahlung kann der abgestreifte Teil der Lichtleitfaser 5 auch neu beschichtet werden, um ihre Haltbarkeit wieder herzustellen, wie beim vierten Faser-Bragg-Gitter 13 des Zuführungswellenleiters 7.

Wenn dem Bragg-Gitter 5 ein breites Lichtspektrum als Eingangssignal zugeführt wird, durchdringen die meisten Wellenlängen den Gitterbereich und bilden ein transmittiertes Ausgangssignal. Die periodischen Störungen des Brechungsindexes n erzeugen aber bei Bestandteilen des Eingangssignals eine starke Bragg-Reflexion mit der Wellenlänge $\lambda_B$ der sogenannten Bragg-Wellenlänge, die sich nach der Formel $\lambda_B = 2n\Lambda$ ergibt, wobei n der effektive Brechungsindex und $\Lambda$ die Gitterperiode darstellen.

Mit einem Spektrometer oder einem sogenannten Fabry-Perot-Filter können die durch die Bragg-Gitter 5 reflektierten Lichtwellensignale detektiert werden. Dabei zeigt die Wellenlänge $\lambda$, bei der ein Peak in Reflexion auftritt, einen Wert, der von Gitterperiode $\Lambda$ abhängig ist. Wenn eine Längsdehnung auf das Bragg-Gitter 5 wirkt, ändert sich der Abstande $\Lambda$, so dass sich die Bragg-Wellenlänge $\lambda_B$ verschiebt. Die Bragg-Wellenlänge $\lambda_B$ verhält sich dabei annähernd proportional zur Dehnung entlang der Längsachse der Lichtwellenleiter 2, 3, 4. Die Wellenlängenänderung $\Delta\lambda_B$ ist also ein Maß für die in den Verformungskörper eingeleitete Kraft. Deshalb können derartige optische Dehnungsmessstreifen 1 ähnlich wie elektrische Dehnungsmessstreifen auf vorgesehene Verformungskörper vorzugsweise auch in Wägezellen, Drehmomentwellen oder anderen Kraftaufnehmern eingesetzt werden. Allerdings sind derartige optische Dehnungsmessstreifen 1 auch bei Belastungsversuchen beispielsweise in der Luft- und Raumfahrt verwendbar, wo die optischen Dehnungsmessstreifen 1 dann direkt auf die belasteten Bauteile appliziert werden, wobei insbesondere die erfindungsgemäßen Rosetten zur Messung der unbekannten Krafteinleitungsrichtungen vorteilhaft sind. Aber auch zur Überwachung des Betriebszustands belasteter Bauteile sind derartige optische Dehnungsmessstreifen 1 einsetzbar, die bei der Überschreitung einer vorgegebenen Grenzdehnung einen Ermüdungsschaden oder eine Rissbildung erfassen können.

Zur Erfassung der dehnungsabhängigen Belastung ist allerdings eine spezielle spektrale Auswerteeinheit mit beispielsweise einem Fabry-Perot-Filter vorgesehen, die im Grunde eine Sende- und Empfangseinheit für Lichtwellenleiter 2, 3, 4 darstellt, in der mittels der Auswerteeinheit die vom Faser-Bragg-Gitter 5 reflektierte Wellenlänge $\lambda_B$ detektiert wird. Dabei wird zunächst im unbelasteten Zustand mittels einer vorzugsweise Infrarotlichtquelle als Sendeeinheit ein breitbandiges Lichtsignal mit einer Wellenlänge $\lambda$ von vorzugsweise ca. 1525 bis 1575 nm in die Lichtwellenleiter 2, 3, 4 eingespeist. Durch die Bragg-Gitter 5 wird nun aufgrund des Zusammenhangs $\lambda_B = 2n\Lambda$ jeweils eine vorbestimmte Wellenlänge $\lambda_{B0}$ reflektiert, die in einem Koppler von den abgestrahlten Lichtsignalen getrennt wird. Mit Hilfe eines nachfolgenden bekannten Fabry-Perot-Filters in der Empfangseinheit oder einer anderen Spektrometereinheit können dann die reflektierten Lichtwellensignale mit einer Auflösung von 1 pm erfasst und als Referenzwert $\lambda_{B0}$ elektronisch gespeichert oder in einer Anzeigevorrichtung angezeigt werden.

Tritt nun eine belastungsabhängige Dehnung am Verformungskörper auf, die über die applizierte Trägerfolie 6 eine Längenänderung des Lichtwellenleiters 2, 3, 4 bewirkt, so ändert sich über die Gitterperiode $\Lambda$ auch die jeweils reflektierte Wellenlänge $\lambda_{B1}$ des Bragg-Gitters 5, die ebenfalls mit Hilfe des Fabry-Perot-Filters detektiert wird. Wird nun die Differenz aus der jeweiligen Referenz-Bragg-Gitterwellenlänge $\lambda_{B0} - \lambda_{B1}$ gebildet, so erhält man einen Wert, der der Dehnung bzw. der Belastungskraft proportional ist und der in einer Anzeigevorrichtung als Dehnung oder Kraft anzeigbar ist. Dabei werden bei der vorliegenden Rosette aus den drei nebeneinander im Winkel von 45° zueinander angeordneten Lichtleitfasern 2, 3, 4 alle drei Dehnungs- oder Kraftkomponenten separat ausgewertet und über deren bekannte Winkelposition wie bei elektrischen Dehnungsmessstreifenrosetten als Einzelkraftkomponenten oder als resultierende Kraft berechnet.

Allerdings ist eine derartige Dehnungs- oder Krafterfassung nur hinreichend genau, wenn die Umgebungstemperatur immer gleich bleibend konstant ist, da derartige Bragg-Gitter 5 ihre reflektierte Wellenlänge $\lambda_B$ auch proportional zur Umgebungstemperatur ändern. Deshalb kann man mit derartigen optischen Dehnungsmessstreifen 1 im Grunde ohne belastungsabhängige Dehnung auch die Temperatur T messen. Denn die Bragg-Wellenlänge $\lambda_B$ shiftet als Funktion der Dehnung $\varepsilon$ und der Temperatur T nach der Beziehung:

$$\Delta\lambda_B = K_E \times \varepsilon + K_T \times \Delta T$$

Dabei entspricht:

$K_E$ = der Empfindlichkeitsfaktor der Dehnung;
$\varepsilon$ = die Dehnung;
$K_T$ = der Empfindlichkeitsfaktor der Temperatur, und
$\Delta T$ = die Temperaturänderung.

Da man nach der obenstehenden Beziehung allerdings nicht zwischen der temperatur- und dehnungsbedingten Bragg-Wellenlängenänderung $\Delta\lambda_B$ unterscheiden kann und eine gleich bleibende Temperaturkonstanz nicht immer einhaltbar ist, wird zusätzlich noch ein viertes Bragg-Gitter 13 im Zuführungswellenleiter 7 zur Temperaturkompensation vorgesehen. Durch dieses vierte Bragg-Gitter 13 wird deshalb eine weitere nur temperaturabhängige Wellenlängenänderung $\Delta\lambda_{BT}$ ($\lambda_{BT} = K_T\Delta T$) mit Hilfe einer Empfangseinheit detektiert, die in der Auswerteeinheit von den dehnungs- und temperaturbedingten Wellenlängenänderungen $\Delta\lambda_B$ die temperaturabhängige Wellenlängenänderung $\Delta\lambda_{BT}$ durch ein Rechenglied zur Temperaturkompensation subtrahiert wird. Dadurch erhält man einen sehr genauen Messwert der Dehnung oder Kraft, der unabhängig von der Temperatur des optischen Dehnungsmessstreifens 1 ist.

Des weiteren sind auch optische Dehnungsmessstreifen 1 ausbildbar, bei denen auf einer größeren Trägerfolienfläche gleichzeitig mehrere Rosetten angeordnet sind, die eine flächige Dehnungserfassung ermöglichen, um beispielsweise auch an komplizierten Bauteilen eine Analyse des Spannungsverlaufs zu ermitteln.

**Patentansprüche**

1. Optischer Dehnungsmessstreifen (1) zur mehrachsigen Dehnungsmessung der mindestens zwei messende Lichtwellenleiterabschnitte (2, 3, 4) mit Bragg-Gittern (5) enthält, die in mindestens einem vorgegebenen Winkel (19) nebeneinander auf einer Trägerschicht (6) angeordnet sind und von einem gemeinsamen Zuführungswellenleiter (7) mit Lichtwellen gespeist werden, **dadurch gekennzeichnet, dass** alle Wellenleiterabschnitte (2, 3, 4, 7) auf der Trägerschicht (6) geradlinig ausgebildet sind und dass zwischen dem Zuführungswellenleiterabschnitt (7) und den messenden Wellenleiterabschnitten (2, 3, 4) ein Strahlaufweitungselement (8) angeordnet ist.

2. Optischer Dehnungsmessstreifen nach Anspruch 1, **dadurch gekennzeichnet, dass** dieser als Rosette ausgebildet ist, die zwei oder drei nebeneinander und winkelversetzt angeordnete messende Wellenleiterabschnitte (2, 3, 4) aufweist, die jeweils ein Bragg-Gitter (5) unterschiedlicher Gitterperiode (Λ) enthalten, und vor dem Strahlaufweitungselement (8) zusammenlaufen.

3. Optischer Dehnungsmessstreifen nach Anspruch 1 oder 2, **dadurch gekennzeichnet, dass** die Rosette aus zwei messenden Wellenleiterabschnitten (2, 4) besteht, die einen Winkel von 90° miteinander bilden oder aus drei messenden Wellenleiterabschnitten (2, 3, 4) besteht, bei denen die jeweils benachbarten beiden Wellenleiterabschnitte (2, 3, 4) einen Winkel (19) von 45° miteinander bilden.

4. Optischer Dehnungsmessstreifen nach einem der vorhergehenden Ansprüche, **dadurch gekennzeichnet, dass** die messenden Wellenleiterabschnitte (2, 3, 4) von einem gemeinsamen Zuführwellenleiter (7) mit Lichtwellen gespeist werden, an dessen Ende als Strahlaufweitungselement (8) eine Gradienten-Index-Linse (9) und ein sinusförmiges Transmissions-Phasengitter (10) oder nur eine Gradienten-Index-Linse (9) angeordnet ist.

5. Optischer Dehnungsmessstreifen nach einem der vorhergehenden Ansprüche, **dadurch gekennzeichnet, dass** alle geradlinigen Wellenleiterabschnitte (2, 3, 4, 7) und auch das Strahlaufweitungselement (8) in einer dünnen Trägerschicht (6) integriert sind, die als Trägerfolie ausgebildet ist.

6. Optischer Dehnungsmessstreifen nach einem der vorhergehenden Ansprüche, **dadurch gekennzeichnet, dass** die Trägerfolie (6) aus Metall, Glas, Keramik oder einem harten elastischen Kunststoff besteht, in der zur Aufnahme der Wellenleiterabschnitte (2, 3, 4, 7) und des Strahlungsaufweitungselements (8) Führungskanäle (11, 18) ausgespart sind, deren Querschnitte rund, ekkig oder V-förmig ausgebildet sind und mindestens einen Durchmesser aufweisen, der dem Durchmesser der Wellenleiterabschnitte (2, 3, 4) mit den Bragg-Gittern (5) entspricht.

7. Optischer Dehnungsmessstreifen nach einem der vorhergehenden Ansprüche, **dadurch gekennzeichnet, dass** die messenden Wellenleiterabschnitte (2, 3, 4) als optisch leitfähige Glasfasern ausgebildet sind und zur Dehnungserfassung mit den Bragg-Gittern (5) in die Führungskanäle (18) kraftschlüssig eingepresst oder eingeklebt sind.

8. Optischer Dehnungsmessstreifen nach einem der Ansprüche 1 bis 6, **dadurch gekennzeichnet, dass** die messenden Lichtwellenleiterabschnitte (2, 3, 4) als optisch leitfähiger Kunststoff oder optisch leitfähiges Glas ausgebildet sind, dessen Brechungszahl höher als die Brechungszahl der Trägerfolie (6) ist und die fest in die Führungskanäle (18) eingegossen oder eingebracht sind und in ihren Endbereichen ein Bragg-Gitter (5) aufweisen.

9. Optischer Dehnungsmessstreifen nach einem der vorhergehenden Ansprüche, **dadurch gekennzeichnet, dass** die Trägerfolie (6) quadratisch oder rechteckig ausgebildet und mit einer Abdeckfolie als Deckschicht (12) fest verbunden ist, wobei die Abdeckfolie (12) mindestens die Führungskanäle (11, 18) mit den Wellenleiterabschnitten (2, 3, 4, 7) und dem Strahlaufweitungselement (8) abdeckt.

10. Optischer Dehnungsmessstreifen nach einem der vorhergehenden Ansprüche, **dadurch gekennzeichnet, dass** in den Zuführungswellenleiter (7) noch ein zusätzliches viertes Bragg-Gitter (13) zur Temperaturkompensation dehnungsunabhängig außerhalb der Trägerfolie (6) angeordnet ist.

11. Verfahren zur Herstellung eines optischen Dehnungsmessstreifens (1) nach einem der vorhergehenden Ansprüche 1 bis 10, **dadurch gekennzeichnet, dass** in die auf eine vorgesehene Fläche ausgeschnittene Trägerfolie (6) mindestens drei geradlinige Führungskanäle (11, 18) durch ein Ätzoder mechanisches materialabtragendes Fertigungsverfahren eingearbeitet werden, in die die messenden Lichtwellenleiter (2, 3, 4) mit den eingeprägten Bragg-Gittern (5) und ein Strahlaufweitungselement (8) sowie ein Zuführungswellenleiter (7) kraft- und Führungskanäle (11, 18) mit einer Deckschicht (12) abgedichtet werden.

## Claims

1. Optical strain gauge (1) for multi-axis strain measurement, which contains at least two measuring light waveguide sections (2, 3, 4) having Bragg gratings (5), which are disposed at at least one defined angle (19) adjacent one another on a carrier layer (6) and are supplied with light waves by a common feeder waveguide (7), **characterized in that** all of the waveguide sections (2, 3, 4, 7) are formed rectilinearly on the carrier layer (6) and that between the feeder waveguide section (7) and the measuring waveguide sections (2, 3, 4) there is arranged a beam expansion element (8).

2. Optical strain gauge according to claim 1, **characterized in that** it takes the form of a rosette comprising two or three measuring waveguide sections (2, 3, 4) arranged adjacent one another and angularly offset, which each contain a Bragg grating (5) of a differing grating period (Λ) and converge in front of the beam expansion element (8).

**3.** Optical strain gauge according to claim 1 or 2, **characterized in that** the rosette comprises two measuring waveguide sections (2, 4), which together form an angle of 90°, or three measuring waveguide sections (2, 3, 4), of which each two adjacent waveguide sections (2, 3, 4) together form an angle (19) of 45°.

**4.** Optical strain gauge according to one of the preceding claims, **characterized in that** the measuring waveguide sections (2, 3, 4) are supplied with light waves by a common feeder waveguide (7), on the end of which as beam expansion element (8) there is arranged a graded-index lens (9) and a sinusoidal transmission phase grating (10) or only a graded-index lens (9).

**5.** Optical strain gauge according to one of the preceding claims, **characterized in that** all of the rectilinear waveguide sections (2, 3, 4, 7) as well as the beam expansion element (8) are integrated in a thin carrier layer (6), which takes the form of a carrier film.

**6.** Optical strain gauge according to one of the preceding claims, **characterized in that** the carrier film (6) is made of metal, glass, ceramic or a hard flexible plastics material, in which for receiving the waveguide sections (2, 3, 4, 7) and the beam expansion element (8) guide channels (11, 18) are cut out, the cross sections of which are round, angular or V-shaped and have at least one diameter that corresponds to the diameter of the waveguide sections (2, 3, 4) having the Bragg gratings (5).

**7.** Optical strain gauge according to one of the preceding claims, **characterized in that** the measuring waveguide sections (2, 3, 4) take the form of optically conductive glass fibres and for strain measurement with the Bragg gratings (5) are pressed or glued in force-locking manner into the guide channels (18).

**8.** Optical strain gauge according to one of claims 1 to 6, **characterized in that** the measuring light waveguide sections (2, 3, 4) take the form of optically conductive plastics material or optically conductive glass, the refractive index of which is higher than the refractive index of the carrier film (6) and which are fixedly cast or introduced into the guide channels (18) and have a Bragg grating (5) in their end regions.

**9.** Optical strain gauge according to one of the preceding claims, **characterized in that** the carrier film (6) is of a square or rectangular construction and is fixedly connected to a cover film as outer layer (12), wherein the cover film (12) covers at least the guide channels (11, 18) having the waveguide sections (2, 3, 4, 7) and the beam expansion element (8).

**10.** Optical strain gauge according to one of the preceding claims, **characterized in that** there is arranged in the feeder waveguide (7) an additional fourth Bragg grating (13) for temperature compensation in a strain-independent manner outside of the carrier film (6).

**11.** Method of manufacturing an optical strain gauge (1) according to one of the preceding claims 1 to 10, **characterized in that** an etching- or mechanical material-eroding production method is used to incorporate into the carrier film (6), which has been cut to an intended surface area, at least three rectilinear guide channels (11, 18), into which the measuring light waveguides (2, 3, 4) having the embossed Bragg gratings (5) as well as a beam expansion element (8) and a feeder waveguide (7) are fastened in force - and shape-locking manner, wherein at least the guide channels (11, 18) are sealed by means of an outer layer (12).

**Revendications**

**1.** Jauge extensométrique optique (1) pour la mesure multiaxiale de d'allongement, contenant non moins de deux sections guide d'ondes optiques de mesure (2, 3, 4) à réseaux de Bragg (5), dont l'une au moins est placée sous un angle prédéfini (19), et qui sont disposées l'une près de l'autre sur un feuil porteur (6) et alimentées par des ondes lumineuses au moyen d'un guide d'ondes d'alimentation (7), **caractérisée en ce que** toutes les sections guide d'ondes (2, 3, 4, 7) sont placées de manière linéaire et qu'entre la section guide d'ondes d'alimentation (7) et les sections guide d'ondes (2, 3, 4) de mesure se trouve un élément d'expansion du faisceau (8).

**2.** Jauge extensométrique optique selon la revendication 1, **caractérisée en ce que** la jauge en forme de rosette présente deux ou trois sections guide d'ondes de mesure (2, 3, 4) disposées l'une près de l'autre en décalage angulaire, comprenant chacune un réseau de Bragg (5), ayant des périodes de réseau différentes (Λ), et qui convergent devant l'élément d'expansion du faisceau (8).

**3.** Jauge extensométrique optique selon la revendication 1 ou 2, **caractérisée en ce que** la rosette est constituée par deux sections guide d'ondes de mesure (2, 4), formant entre elles un angle de 90° ou par trois sections guide ondes de mesure (2, 3, 4), où chacune des sections guide d'ondes (2, 3, 4) avoisinantes forment entre elles un angle (19) de 45°.

**4.** Jauge extensométrique optique selon l'une des revendications précédentes, **caractérisée en ce que** les sections guide d'ondes (2, 3, 4) de mesure sont alimentées en ondes lumineuses par une section guide d'onde d'alimentation (7), dont à l'extrémité, pour assurer sa qualité d'élément d'expansion de faisceau (8), on trouve une lentille à gradient d'indice (9) et un réseau de phase de transmission (10), ou seulement une lentille à gradient d'indice (9).

**5.** Jauge extensométrique optique selon l'une des revendications précédentes, **caractérisée en ce que** toutes les sections guide d'ondes rectilignes (2, 3, 4) de même que l'élément d'expansion de faisceau (8) sont intégrés dans une couche mince porteuse (6), constituée comme un feuil porteur.

**6.** Jauge extensométrique optique selon l'une des revendications précédentes, **caractérisée en ce que** le feuil porteur (6) est en métal, verre, céramique ou une matière synthétique dure et élastique, dans lequel sont évidés des canaux de guidage (11, 18) servant à la fixation des sections guide d'ondes (2, 3, 4, 7) et de l'élément d'expansion du faisceau (8), les canaux de section ronde, carrée ou en forme de V, ayant un diamètre correspondant à celui, et non moindre des sections guide d'ondes (2, 3, 4) équipées de réseaux de Bragg (5).

**7.** Jauge extensométrique optique selon l'une des revendications précédentes, **caractérisée en ce que** les sections guide d'ondes de mesure (2, 3, 4) sont conçues comme des fibres de verre conductrices optiques et sont enfoncées par la force ou encollées dans les canaux de guidage (18) aux fins de la saisie de l'allongement par les réseaux de Bragg (5)

**8.** Jauge extensométrique optique selon l'une des revendications de 1 à 6, **caractérisée en ce que** les sections guide d'ondes de mesure (2, 3, 4) sont en matière synthétique optiquement conductrice ou en verre optiquement conducteur, dont l'indice de réfraction est supérieur à l'indice de réfraction du feuil porteur (6) et qui y sont moulées ou introduites, et comportent à leur extrémité un réseau de Bragg (5).

**9.** Jauge extensométrique optique selon l'une des revendications précédentes, **caractérisée en ce que** la couche de support (6) de forme carrée ou rectangulaire, est fermement liée à une feuille mince de recouvrement formant une couche protectrice (12), où la feuille mince de recouvrement (12) couvre au moins les canaux de guidage (11, 18) comportant les sections guide d'ondes (2, 3, 4, 7) et l'élément d'expansion du faisceau (8).

**10.** Jauge extensométrique optique selon l'une des revendications précédentes, **caractérisée en ce que** un quatrième réseau de Bragg (13) servant à la compensation de la température, indépendante de l'allongement à l'extérieur du feuil porteur (6), se trouve dans le conducteur d'ondes d'alimentation (7).

**11.** Procédé destiné à la fabrication d'une jauge extensométrique optique (1) selon l'une des revendications de 1 à 10, **caractérisée en ce que** sur une surface prédéfinie du feuil porteur (6), au moins trois canaux de guidage rectilignes (11, 18) sont façonnés au moyen d'un procédé caustique ou mécanique de fabrication d'enlèvement de matière, dans lesquels seront fixés mécaniquement par adhérence par la force ou par concordance de forme les conducteurs d'ondes lumineuses de mesure (2, 3, 4,) avec le réseau de Bragg incorporé (5) et un élément d'expansion du faisceau (8), ainsi qu'un conducteur d'ondes d'alimentation (7), où les canaux de guidage (11, 18), au moins, sont étanchéifiés par une couche protectrice (12).

Fig 1

Fig 2

15

12

1

6

11    17    16    7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1129327 B1